# EUROPÄISCHE PATENTSCHRIFT

(11) **EP 3 537 872 B1**
(45) Veröffentlichungstag und Bekanntmachung des Hinweises auf die Patenterteilung: **03.03.2021**
(21) Anmeldenummer: 17826160.8
(22) Anmeldetag: 11.12.2017
(51) Int. Cl.: A01K 39/01, A01K 5/02

(54) **MITNEHMER EINER FUTTERKETTE, UND FUTTERKETTE**
CARRIER OF A FEED CHAIN, AND FEED CHAIN
TRANSPORTEUR D'UNE CHAÎNE D'ALIMENTS POUR ANIMAUX, ET CHAÎNE D'ALIMENTS POUR ANIMAUX

(30) Priorität: 16.12.2016 DE 202016107093 U
(43) Veröffentlichungstag der Anmeldung: 18.09.2019
(73) Patentinhaber: Kühlmann, Franz Josef, 48366 Laer (DE)
(72) Erfinder: Kühlmann, Franz Josef, 48366 Laer (DE)
(74) Vertreter: Habbel, Ludwig
(86) Internationale Anmeldenummer: PCT/EP2017/082232
(87) Internationale Veröffentlichungsnummer: WO 2018/108819

(56) Entgegenhaltungen:
- DE-U1-202016 003 707
- US-A- 1 048 848
- US-A- 2 699 250

## Beschreibung

Die Erfindung betrifft den Mitnehmer einer Futterkette nach dem Oberbegriff des Anspruchs 1.

Futterketten sind aus der Praxis bekannt. Sie dienen dazu, Futter einer größeren Anzahl von Tieren zuzuführen. Hierzu laufen die Futterketten in einer Futterrinne, die teilweise mit Futter gefüllt ist. Mithilfe der Mitnehmer wird einerseits eine zunächst vorhandene Menge an Futter gleichmäßig über die gesamte Länge der Futterrinne verteilt, und andererseits wird Nachschub an Futter mittels der Futterkette herangeführt.

Eine Futterkette ist dadurch besonders wirtschaftlich ausgestaltet, dass ihre Kettenglieder nicht als Spezialelemente ausgestaltet sind, sondern vielmehr ringförmig, beispielsweise als länglichovale Kettenglieder aus Runddraht, also Draht mit einem runden Querschnitt. Derartige Ketten sind für die unterschiedlichsten Einsatzzwecke im Handel erhältlich, mit unterschiedlichen Außenabmessungen der einzelnen Kettenglieder, unterschiedlichen Materialstärken des verwendeten Runddrahts, sowie aus unterschiedlichen Werkstoffen. Aus der Praxis ist es bekannt, dass als Mitnehmer beispielsweise Winkelstücke aus Stahl Verwendung finden, die einen annähernd L-förmigen Querschnitt aufweisen und quer zur Längsachse der Kette verlaufen, so dass sie als Schieber über den Grund der Futterrinne gezogen werden können. Die Befestigung eines solchen Mitnehmers an dem jeweiligen Kettenglied erfolgt üblicherweise durch Schweißen.

Die Mitnehmer sind stets an die Futterkette angepasst. Selbst wenn es sich bei der Futterkette um eine handelsübliche Kette mit den erwähnten länglich-ovalen Kettengliedern aus Runddraht handelt und bei den Mitnehmern um handelsübliches Halbzeug wie die erwähnten Metall-Winkelprofile mit einem L-förmigen Querschnitt, so besteht die Anpassung der Mitnehmer beispielsweise in der Auswahl der gewünschten Länge des Winkelprofils, um, wenn es quer zur Länge der Futterkette montiert wird, den erwähnten beiderseitigen Überstand des Mitnehmers über das Kettenglied zu bewirken.

Aus der US 1 048 848 A, die den am nächsten kommenden Stand der Technik bildet, ist eine Förderkette bekannt, die ovale Kettenglieder aus Rundstahl aufweist und mit geschlitzten Mitnehmern bestückt ist. Der Schlitz verleiht dem jeweiligen Mitnehmer eine Elastizität und bewirkt, dass beiderseits des Schlitzes der Mitnehmer zwei Arme aufweist. An der jeweiligen vom Schlitz abgewandten Außenseite sind beide Arme mit Mulden versehen. Unter Verringerung der Schlitzweite können die Arme zusammengedrückt werden, so dass der Mitnehmer in ein Kettenglied eingeführt werden und dort einrasten kann, wobei die Mulden einen Formschluss mit dem Kettenglied schaffen.

Aus der DE 20 2016 003 707 U1 ist eine Futterkette bekannt, die längs durch einen rohrförmigen Förderkanal läuft. Die Futterkette ist mit kreisförmigen Mitnehmern bestückt ist, welche einen Großteil der inneren freien Rohrquerschnittsfläche ausfüllen und die daher quer zur Längsachse der Futterkette in allen Richtungen über die Abmessungen der Kettenglieder hinausragen. Zur Aufnahme der Mitnehmer werden spezielle Kettenglieder verwendet, die abweichend von der üblichen ovalen Ausgestaltung tailliert sind, so dass dadurch die Mitnehmer dagegen gesichert sind, auf dem Kettenglied in Längsrichtung verschoben zu werden

Der Erfindung liegt die Aufgabe zugrunde, einen gattungsgemäßen Mitnehmer dahingehend zu verbessern, dass dieser eine möglichst preisgünstige Herstellung und eine möglichst lange Lebensdauer einer Futterkette sowie eine möglichst einfache und preisgünstige Wartung der Futterkette ermöglicht. Weiterhin liegt der Erfindung die Aufgabe zugrunde, eine Futterkette mit diesen vorteilhaften Eigenschaften zu schaffen.

Diese Aufgabe wird durch einen Mitnehmer mit den Merkmalen des Anspruchs 1 gelöst sowie durch eine Futterkette nach Anspruch 10. Vorteilhafte Ausgestaltungen sind in den Unteransprüchen beschrieben.

Die Erfindung schlägt mit anderen Worten vor, den Mitnehmer so auszugestalten, dass er keine Schweißverbindung erfordert, sondern durch eine Rastverbindung an einem Kettenglied befestigt werden kann. Auf diese Weise können mehrere wirtschaftliche Vorteile verwirklicht werden:
- Für diesen Montageschritt ist kein Fachpersonal erforderlich, welches ein Schweißzertifikat hält, so dass die Montage preisgünstig mit angelerntem Personal oder auch maschinell erfolgen kann.
- Zudem wird ein beim Schweißen unvermeidlicher Wärmeeintrag in das Kettenglied vermieden, welcher zu einer Gefügeänderung und ggf. zu einer Versprödung des Kettenglieds führen kann. Es ist nicht auszuschließen, dass die Versprödung bei entsprechenden mechanischen Belastungen, z.B. durch Vibrationen und / oder Zugkräfte, einen Bruch des Kettengliedes vor Erreichen seiner konstruktiv vorgesehenen Lebensdauer begünstigen kann. Dementsprechend kann für die Kette ein preisgünstiger Werkstoff Verwendung finden, für dessen Belastbarkeit nicht die eventuelle Schwächung durch den Schweißvorgang berücksichtigt zu werden braucht.
- Im Falle einer Beschädigung eines Mitnehmers ermöglicht die Rastverbindung eine unkomplizierte Wartung der Futterkette, denn ohne die Kette aus der Futterrinne entnehmen zu müssen, kann die Rastverbindung eines beschädigten Mitnehmers gelöst, dieser Mitnehmer entfernt, und ein neuer Mitnehmer an demselben Kettenglied befestigt werden.
- Ein solcher Austausch eines Mitnehmers, oder auch die Bestückung der Futterkette mit zusätzlichen Mitnehmern kann vom Betreiber der Fütterungsanlage selbst durchgeführt werden, auch ohne Schweißkenntnisse, und ohne Fachpersonal des Herstellers der Futterkette hinzuziehen zu müssen. Dementsprechend kurzfristig kann eine Reparatur durchgeführt werden, so dass die volle Funktionsfähigkeit der Fütterungsanlage möglichst schnell wiederhergestellt werden kann.

Eine zuverlässige und verdrehsichere Festlegung des Mitnehmers an dem jeweiligen Kettenglied wird vorschlagsgemäß dadurch sichergestellt, dass der Mitnehmer zwei Aufnahmemulden aufweist, in denen somit zwei gegenüberliegende Abschnitte des Kettengliedes aufgenommen werden können. Der Mitnehmer ist zumindest im Bereich dieser beiden Aufnahmemulden so elastisch ausgestaltet, dass er auf das Kettenglied aufgeclipst werden und somit die gewünschte Verrastung hergestellt werden kann. Eine sichere Führung des Mitnehmers an dem Kettenglied wird vorteilhaft dadurch bewirkt, dass die Aufnahmemulden als Nuten ausgestaltet sind, die in Längsrichtung des Kettengliedes verlaufen, beispielsweise über etwa ein Drittel oder die Hälfte der Länge des Kettengliedes.

Bei entsprechender Dimensionierung der Bauteile in Abstimmung auf die zu verwendende Kette kann der Mitnehmer in Hoch- und Querrichtung an dem Kettenglied verschiebesicher festgelegt werden. In Längsrichtung der Futterkette hingegen kann der Mitnehmer ggf. innerhalb des Kettengliedes verschoben werden, nämlich wenn das Kettenglied zwei geradlinige, parallele und sich in Längsrichtung erstreckende Abschnitte aufweist, und wenn die beiden Aufnahmemulden des Mitnehmers kürzer bemessen sind als diese geradlinigen Abschnitte des Kettengliedes. Dadurch, dass der Mitnehmer nicht in Längsrichtung spielfrei an dem Kettenglied montiert wird, wird die Montage des Mitnehmers vereinfacht.

Um den Sitz des Mitnehmers an dem Kettenglied in Art einer Rastverbindung zu ermöglichen, weist der Mitnehmer vorschlagsgemäß einen pilzförmigen Vorsprung auf. Entsprechend dem als Vergleich herangezogenen Bild eines Pilzes weist dieser Vorsprung einen aufrecht verlaufenden Stamm auf, der sich zwischen den beiden gegenüberliegenden Abschnitten des Kettengliedes erstreckt. Am Ende dieses Stammes ist ein Schirm vorgesehen, der liegend ausgerichtet ist, sich zu beiden Seiten über den Stamm hinaus seitlich erstreckt und somit die beiden gegenüberliegenden Abschnitte des Kettengliedes übergreift.

Um die Rastverbindung zu ermöglichen, kann der Mitnehmer in einer Ausgestaltung zwei Ausnehmungen aufweisen, in denen zwei gegenüberliegende Abschnitte eines Kettengliedes aufgenommen werden. Dadurch, dass diese beiden Ausnehmungen nicht halbkreisförmig oder U-förmig ausgestaltet sind, sondern vielmehr Omega-förmig, können diese beiden Ausnehmungen den jeweiligen Abschnitt des Kettengliedes um mehr als 180° umgreifen, erstrecken sich also über den Äquator des jeweiligen Abschnitts des Kettengliedes.

Vorteilhaft kann der Mitnehmer aus Kunststoff bestehen. Durch entsprechend selbstschmierende Eigenschaften, wie sie beispielsweise von Polyamid- oder Polyäthylen-Werkstoffen bekannt sind, wird ein verschleißarmer und auch leiser Lauf der Futterkette in der Futterrinne unterstützt. Zudem sind hygienisch unbedenkliche Kunststoffe verwendbar. Schließlich kann der aus Kunststoff bestehende Mitnehmer durchgängig eine ausreichende Materialelastizität aufweisen, um die gewünschte Rastverbindung mit dem Kettenglied herzustellen. Die Elastizität des Kunststoffs ermöglicht auch einen Toleranzausgleich, wenn der Durchmesser des Runddrahtes, aus dem die Kettenglieder bestehen von Kette zu Kette oder innerhalb einer Kette von Kettenglied zu Kettenglied unterschiedlich sein sollte. Wenn aus Stahl bestehende, zu einem geschlossenen Ring geschweißte Kettenglieder verwendet werden und sich im Bereich der Stoßstelle bzw. Schweißnaht der Durchmesser des Runddrahtes ändert, wird auch dies durch die Elastizität des Kunststoffs ausgeglichen, so dass der Mitnehmer problemlos auf das Kettenglied aufgeclipst werden kann.

Um auch unter sehr rauen Betriebsbedingungen einen zuverlässigen Halt des Mitnehmers an dem Kettenglied der Futterkette sicherzustellen, kann vorteilhaft ein Halteriegel vorgesehen sein, der die beiden Aufnahmemulden überdeckt, in denen die beiden gegenüberliegenden Abschnitte des Kettengliedes aufgenommen sind. Der Halteriegel verhindert, dass diese beiden Abschnitte aus ihrer jeweiligen Aufnahmemulde heraus geraten können.

In einer ersten Ausgestaltung kann der Halteriegel unverlierbar, aber beweglich am Mitnehmer gehalten sein, nämlich in Form eines Scharniers. Im Abstand von dem Scharnier weist der Halteriegel eine geometrische Ausgestaltung auf, die als Rastgeometrie bezeichnet ist, weil sie mit einer dazu komplementären Rastgeometrie des Mitnehmers zusammenwirkt. Auf diese Weise kann der Halteriegel am Mitnehmer verrastet werden.

Das Scharnier eines solchen Halteriegels kann vorteilhaft als Filmscharnier ausgestaltet sein. Wenn der Mitnehmer aus Kunststoff hergestellt wird, beispielsweise als Spritzguss-Bauteil, können somit der Mitnehmer und der Halteriegel gemeinsam als ein einziges Bauteil hergestellt werden, so dass die Anzahl der zu handhabenden Teile bei der Montage der Futterkette verringert werden kann.

Alternativ dazu, den Halteriegel verliersicher am Mitnehmer zu halten, kann der Halteriegel als separates, mit dem Mitnehmer nicht verbundenes Bauteil ausgestaltet sein, welches lösbar am Mitnehmer befestigt wird, nachdem der Mitnehmer auf das Kettenglied der Futterkette aufgeclipst worden ist. Die Befestigung des Halteriegels am Mitnehmer kann an beiden Enden des Halteriegels in Form von Rastverbindungen erfolgen, wenn der Mitnehmer und der Halteriegel hierzu die entsprechenden Rastgeometrien aufweisen.

Alternativ zu einer Verrastung des Halteriegels, die ja denselben einwirkenden Kräften ausgesetzt ist wie die Rastverbindung, mit welcher der Mitnehmer an dem Kettenglied der Futterkette gehalten wird, kann vorteilhaft vorgesehen sein, den Halteriegel auf den Mitnehmer aufzuschieben. Hierbei kann ein Formschluss bewirkt werden, der erheblich größere Kräfte aufzunehmen in der Lage ist als eine Rastverbindung. Die Schieberichtung zur Montage des Halteriegels auf dem Mitnehmer erfolgt vorzugsweise in einer anderen Richtung als die Bewegungsrichtung beim Verrasten des Mitnehmers an dem Kettenglied. Wenn beispielsweise diese Verrastung in einer vertikalen Richtung erfolgt, kann die Schiebebewegung vorzugsweise in einer horizontalen Richtung erfolgen, beispielsweise in Längs- oder in Querrichtung der Futterkette. Bezeichnungen wie vertikal, horizontal, vorn und hinten beziehen sich auf die Ausrichtung, welche die Futterkette später in einer horizontal liegenden Futterrinne einnimmt.

Vorteilhaft kann zur Montage des Halteriegels auf dem Mitnehmer der Halteriegel von vorn nach hinten bis gegen einen Anschlag geschoben werden, der am Mitnehmer vorgesehen ist. Im praktischen Einsatz drückt das Futter gegen den Halteriegel und ist bestrebt, den Halteriegel weiter in der Aufschieberichtung zu bewegen, so dass hierdurch zuverlässig ein fester Sitz des Halteriegels am Mitnehmer sichergestellt wird.

Die vorschlagsgemäßen Mitnehmer können einzeln bzw. als separate Elemente hergestellt und vertrieben werden. Eine mit solchen Mitnehmern versehene Kette stellt eine Futterkette dar, welche die eingangs erläuterten, durch die Mitnehmer erzielbaren Vorteile aufweist.

Ausführungsbeispiele der Erfindung werden anhand der rein schematischen Darstellungen nachfolgend näher erläutert. Dabei zeigt
- Fig. 1: eine perspektivische Ansicht auf ein Kettenglied einer Futterkette, mit einem daran befestigten und durch einen Halteriegel gesicherten Mitnehmer,
- Fig. 2: das Kettenglied und den Mitnehmer von Fig. 1,
- Fig. 3: den Mitnehmer in einer Ansicht von vorn,
- Fig. 4: den Mitnehmer in einer perspektivischen Ansicht von schräg unten und hinten, und
- Fig. 5: eine perspektivische Ansicht ähnlich Fig. 1, mit einem zweiten Ausführungsbeispiel eines Mitnehmers.

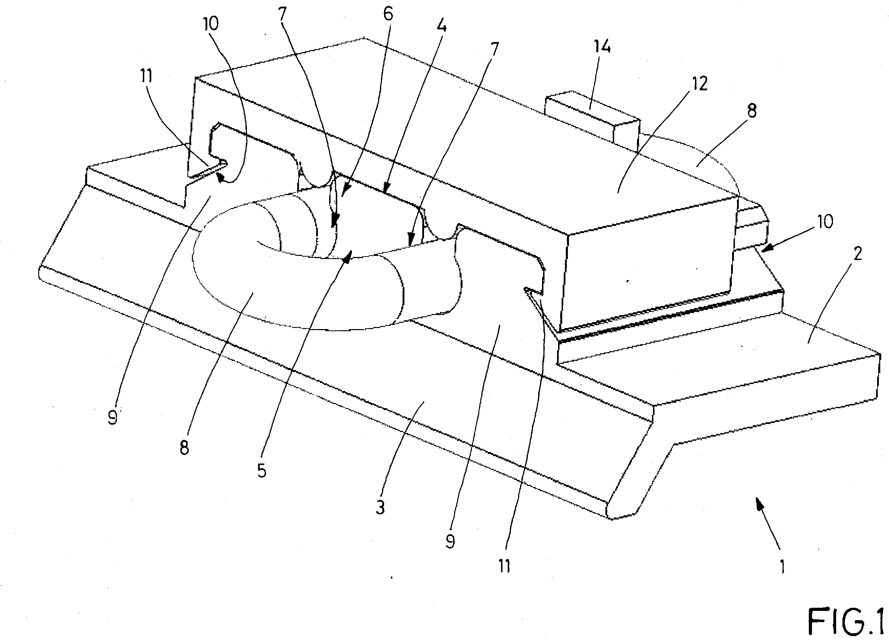

In Fig. 1 ist mit 1 ein Mitnehmer bezeichnet, der eine Plattform 2 und eine vordere Schiebekante 3 aufweist. Von der Plattform 2 aus erstreckt sich in der Mitte des Mitnehmers 1 ein pilzförmiger Vorsprung 4 aufrecht nach oben, wobei dieser Vorsprung 4 tailliert ist, so dass er einen Stamm 5 und einen sich darüber erweiternden Schirm 6 aufweist. Auf diese Weise werden rechts und links von dem Stamm 5 zwei Aufnahmemulden 7 geschaffen, in denen zwei gegenüberliegende Abschnitte eines Kettengliedes 8 aufgenommen sind. Es handelt sich dabei um zwei in Längsrichtung der Kette verlaufende geradlinige Abschnitte.

Seitlich im Abstand beiderseits von dem Vorsprung 4 befinden sich zwei Sockel 9, die in zweierlei Hinsicht Haltefunktionen bieten: einerseits führen sie auf ihrer jeweiligen Innenseite, zum Vorsprung 4 gerichtet, die Kontur der Aufnahmemulden 7 zu einer insgesamt Omega-förmigen Ausgestaltung jeder Aufnahmemulde 7 fort. Die Aufnahmemulden 7 umschließen dabei den jeweiligen Abschnitt des Kettengliedes 8 um mehr als 180°, übergreifen also den Äquator des jeweiligen Abschnitts. Weiterhin weisen die Sockel 9 auf ihrer jeweiligen Außenseite, vom Vorsprung 4 abgewandt, eine Schiebenut 10 auf, in welche eine Schiebekante 11 eines Halteriegels 12 eingreift. Der Halteriegel 12 ist vom vorderen Ende her auf den Mitnehmer 1 aufgeschoben worden, bis er einem Anschlag 14 des Mitnehmers 1 anliegt.

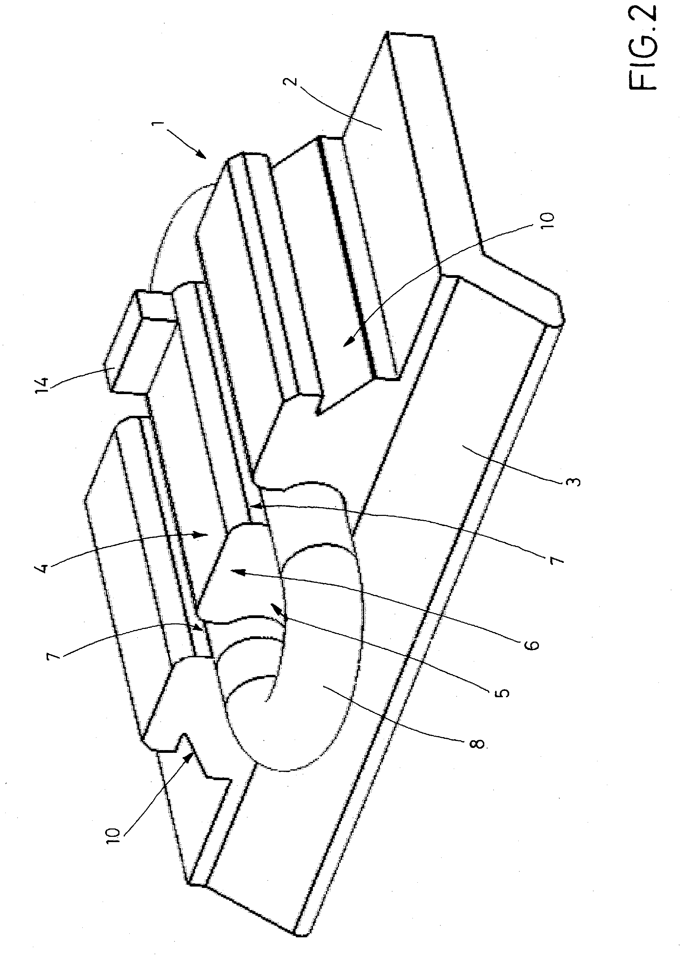

Fig. 2 zeigt den Mitnehmer 1 und das Kettenglied 8 nach Entfernen bzw. vor dem Aufschieben des Halteriegels 12. Der Anschlag 14 befindet sich am hinteren Ende des Mitnehmers 1 oben auf dem Schirm 6 des Vorsprungs 4.

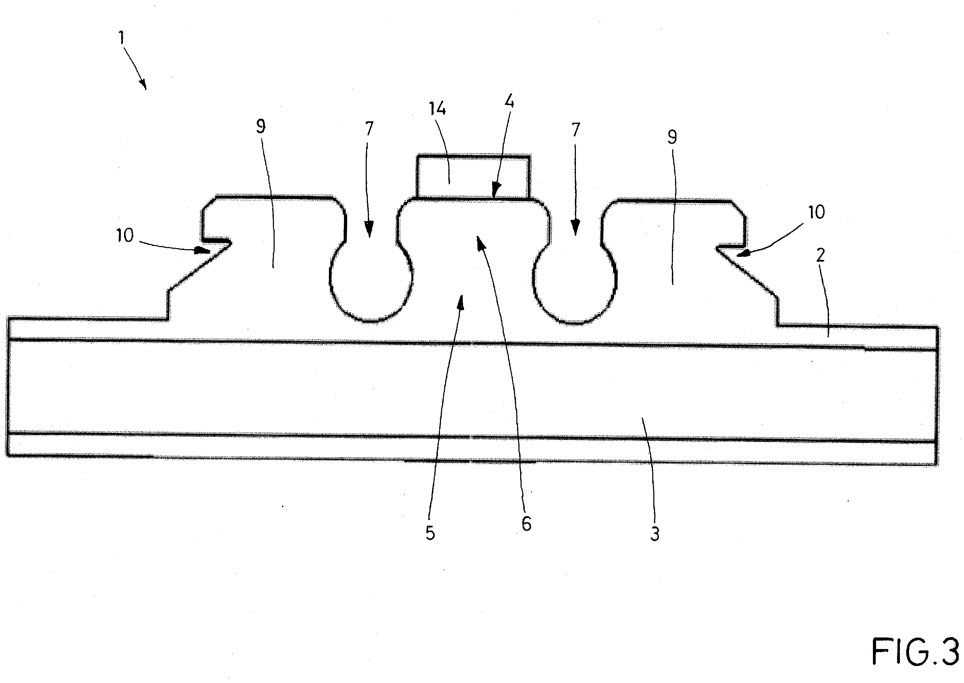

Fig. 3 zeigt den Mitnehmer 1 von vorn, also mit Blick auf die Schiebekante 3, wobei die pilzförmige Querschnittsgeometrie des Vorsprungs 4 und die Omega-förmige Querschnittsgeometrie der Aufnahmemulden 7 und die Ausgestaltung der Schiebenuten 10 deutlich erkennbar sind.

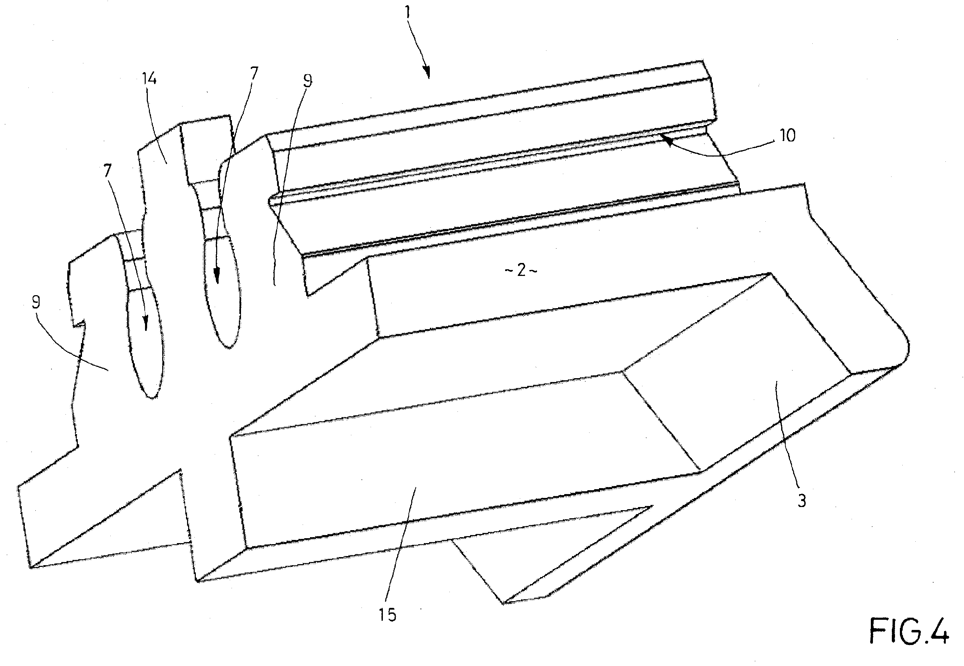

Fig. 4 zeigt den Mitnehmer 1 von seiner rückwärtigen Seite, an welcher sich der Anschlag 14 befindet, und in einer perspektivischen Ansicht von unten. Dabei ist ersichtlich, dass an die Schiebekante 3 nach hinten ein Gleitsteg 15 anschließt, mit welchem der Mitnehmer 1 auf dem Grund einer Futterrinne gleitet.

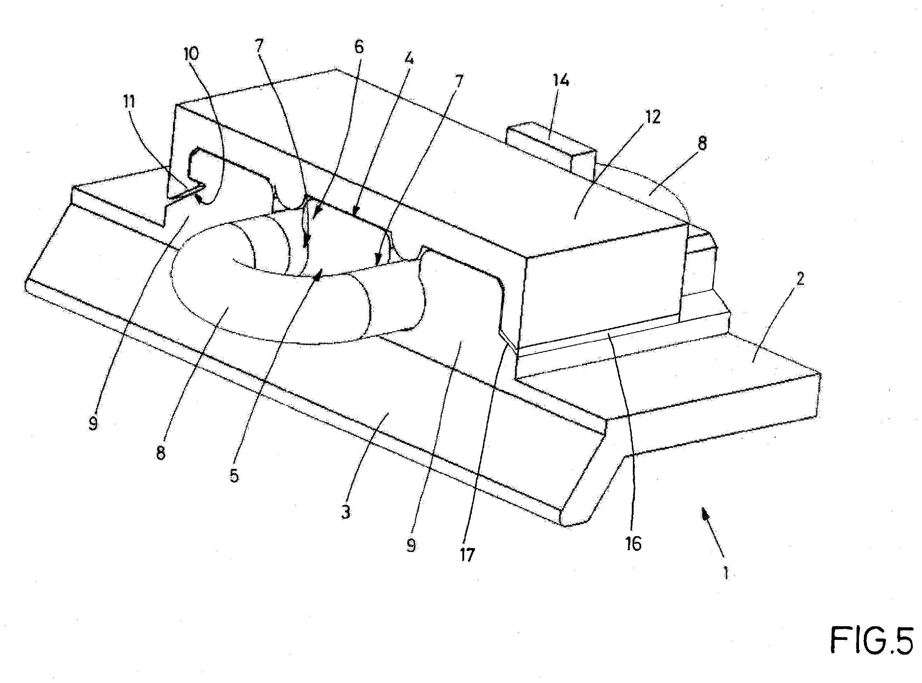

Fig. 5 zeigt einen Mitnehmer 1, bei welchem der Halteriegel 12 nicht als separates Element ausgestaltet ist, sondern als integrales Bestandteil des einteilig ausgestalteten Mitnehmers 1. Bei diesem Ausführungsbeispiel ist der Mitnehmer 12 mittels eines Filmscharniers 16 mit einem der beiden Sockel 9 verbunden, während der gegenüberliegende Sockel 9 eine Geometrie wie der entsprechende Sockel 9 des Ausführungsbeispiels der Fig. 1 aufweist. Dementsprechend werden auch beim Ausführungsbeispiel der Fig. 5 die Begriffe der Schiebenut 10 und der Schiebekante 11 verwendet. Allerdings findet beim Ausführungsbeispiel der Fig. 5 keine Schiebebewegung statt, um den Halteriegel 12 über dem Kettenglied 8 festzulegen. Vielmehr findet bei dem Ausführungsbeispiel der Fig. 5 eine Schwenkbewegung des Halteriegels 12 um das Filmscharnier 16 statt, bis das gegenüberliegende Ende des Halteriegels 12 an dem dortigen Sockel 9 mittels einer Clips- oder Rastverbindung festgelegt ist, indem die Schiebekante 11 in die Schiebenut 10 eingreift.

Bei dem Ausführungsbeispiel der Fig. 5 ist neben dem Filmscharnier 16 ein Spalt 17 zwischen dem Halteriegel 12 und dem Sockel 9 erkennbar, welcher aus der Höhe des Filmscharniers 16 resultiert.

Der Anschlag 14 ist auch bei diesem Ausführungsbeispiel der Fig. 5 vorgesehen. Er dient dazu, den Halteriegel 12 gegen den vom Futter ausgeübten Druck abzustützen, um so das Filmscharnier 16 zu entlasten und zu verhindern, dass der Halterigel 12 unter Verformung des Filmscharniers 16 unerwünscht weit nach hinten bewegt werden kann.

Abweichend von dem in den Zeichnungen dargestellten Anschlag 14 kann der Anschlag auch dadurch verwirklicht werden, dass in der Geometrie eines oder beider Sockel 9 die Länge der Schiebenut 10 begrenzt ist und an die Schiebenut 10 ein Vorsprung anschließt, welcher den gewünschten Anschlag bildet.

### Bezugszeichen:

- 1.: Mitnehmer
- 2.: Plattform
- 3.: Schiebekante
- 4.: Vorsprung
- 5.: Stamm
- 6.: Schirm
- 7.: Aufnahmemulde
- 8.: Kettenglied
- 9.: Sockel
- 10.: Schiebenut
- 11.: Schiebekante
- 12.: Halteriegel
- 14.: Anschlag
- 15.: Gleitsteg
- 16.: Filmscharnier
- 17.: Spalt

## Patentansprüche

1. Mitnehmer (1) zur Verwendung an einer Futterkette mit ringförmigen Kettengliedern,
wobei der Mitnehmer (1) beidseitig über die Breite eines Kettenglieds (8) hinausragend ausgestaltet ist,
der Mitnehmer (1) zwei Aufnahmemulden (7) für zwei gegenüberliegende Abschnitte eines Kettenglieds (8) aufweist,
und der Mitnehmer (1) im Bereich dieser beiden Aufnahmemulden (7) in der Art elastisch ausgestaltet ist, dass er mittels einer Verrastung auf das Kettenglied (8) aufclipsbar ist,
**dadurch gekennzeichnet,**
**dass** der Mitnehmer (1) einen mittigen, etwa pilzförmigen Vorsprung (4) aufweist,
welcher einen aufrecht verlaufenden Stamm (5) und einen liegend verlaufenden Schirm (6) aufweist und derart angeordnet und bemessen ist,
**dass** beiderseits des Stamms (5) und unterhalb des Schirms (6) die beiden Aufnahmemulden (7) geschaffen sind, in denen zwei gegenüberliegende Abschnitte eines Kettenglieds (8) aufnehmbar sind.

2. Mitnehmer nach Anspruch 1,
**dadurch gekennzeichnet,**
**dass** die beiden Aufnahmemulden (7) des Mitnehmers (1) als zwei im Querschnitt jeweils Omega-förmige Ausnehmungen ausgestaltet sind.

3. Mitnehmer nach einem der vorhergehenden Ansprüche,
**dadurch gekennzeichnet,**
**dass** der Mitnehmer (1) aus Kunststoff besteht.

4. Mitnehmer nach einem der vorhergehenden Ansprüche,
**dadurch gekennzeichnet,**
**dass** ein am Mitnehmer (1) festlegbarer Halteriegel (12) die beiden Aufnahmemulden (7) überdeckt.

5. Mitnehmer nach Anspruch 4,
**dadurch gekennzeichnet,**
**dass** der Halteriegel (12) am Mitnehmer (1) anscharniert ist und im Abstand von dem Scharnier eine Rastgeometrie aufweist, welche mit einer komplementären Rastgeometrie des Mitnehmers (1) zusammenwirkt, derart, dass der Halteriegel (12) in Art eines Rastverschlusses am Mitnehmer (1) festlegbar ist.

6. Mitnehmer nach Anspruch 5,
**dadurch gekennzeichnet,**
**dass** der Halteriegel (12) materialeinheitlich, ein Filmscharnier bildend, mit dem Mitnehmer (1) verbunden ist.

7. Mitnehmer nach Anspruch 4,
**dadurch gekennzeichnet,**
**dass** der Halteriegel (12) und der Mitnehmer (1) an zwei voneinander beabstandeten Stellen jeweils komplementäre Rastgeometrien aufweisen, derart, dass der Halteriegel (12) in Art eines Rastverschlusses am Mitnehmer (1) festlegbar ist.

8. Mitnehmer nach Anspruch 4,
**dadurch gekennzeichnet,**
**dass** der Mitnehmer (1) eine das Futter in einer Förderrichtung beaufschlagende Vorderseite aufweist,
und **dass** der Halteriegel (12) von vorn auf den Mitnehmer (1) aufschiebbar ist.

9. Mitnehmer nach einem der Ansprüche 4 bis 8,
**dadurch gekennzeichnet,**
**dass** am Mitnehmer (1) hinter dem Halteriegel (4) ein die Beweglichkeit des Halteriegels (12) begrenzender Anschlag (14) angeordnet ist.

10. Futterkette mit einem nach einem der vorhergehenden Ansprüche ausgestalteten Mitnehmer (1)
wobei die Futterkette mehrere, jeweils an einem Kettenglied (8) befestigte Mitnehmer (1) aufweist.

11. Futterkette nach Anspruch 10,
**dadurch gekennzeichnet,**
**dass** die beiden Aufnahmemulden (7) des Mitnehmers (1) zwei im Querschnitt jeweils Omega-förmig ausgestaltet sind, und in der Art angeordnet und bemessen sind, dass sie zwei gegenüberliegende Abschnitte eines Kettenglieds (8) um jeweils mehr als 180° umfassen.

## Claims

1. Driving bar (1) for use on a feed chain having annular chain links,
where the driving bar (1) is constructed to project further on either side beyond the width of a chain-link (8),
the driving bar (1) incorporates two holding sockets (7) to hold two opposing sections of a chain-link (8),
and where in the area of these two holding sockets (7) the driving bar (1) is constructed elastic in such a way that it can be clip-locked onto the chain-link (8),
**characterised in**
**that** the driving bar (1) incorporates a central, approximately mushroom-shaped projection (4)
**that** incorporates an upright portion (5) that is topped by a horizontal portion (6) and is arranged and dimensioned in such a way
**that** the two holding sockets (7) in which two opposing sections of a chain-link (8) can be held are formed on both sides of the upright portion (5) and below the horizontal portion (6).

2. Driving bar in accordance with claim 1, **characterised in**
**that** the two holding sockets (7) in the driving bar (1) are constructed in the form of two recesses that are omega-shaped in cross-section.

3. Driving bar in accordance with any one of the preceding claims, **characterised in that** the driving bar (1) is manufactured from plastic.

4. Driving bar in accordance with any one of the preceding claims, **characterised in that** a snap-on fastener (12) that can be fastened to the driving bar (1) fits over the two holding sockets (7).

5. Driving bar in accordance with claim 4, **characterised in**
**that** the snap-on fastener (12) is hinged to the driving bar (1) and incorporates at a distance from the hinge locking geometry that co-acts with complementary locking geometry on the driving bar (1)
such that the snap-on fastener (12) can be fastened to the driving bar (1) in the manner of a snap lock.

6. Driving bar in accordance with claim 5, **characterised in**
**that** the snap-on fastener (12) is integrally attached to the driving bar (1) by means of a film hinge.

7. Driving bar in accordance with claim 4, **characterised in**
**that** the snap-on fastener (12) and the driving bar (1) each incorporate at two spaced points complementary locking geometries
such that the snap-on fastener (12) can be fastened to the driving bar (1) in the manner of a snap lock.

8. Driving bar in accordance with claim 4, **characterised in**
**that** the driving bar (1) incorporates a front side that applies pressure to the feed in a direction of conveyance
and the snap-on fastener (12) can be pushed onto the driving bar (1) from the front.

9. Driving bar in accordance with any one of claims 4 to 8, **characterised in**
**that** a stop (14) that limits the movability of the snap-on fastener (12) is arranged behind the snap-on fastener (12) on the driving bar (1).

10. Feed chain having a driving bar (1) constructed in accordance with any one of the foregoing claims,
where the feed chain incorporates a plurality of driving bars (1) each of which is fastened to a chain-link (8).

11. Feed chain in accordance with claim 10, **characterised in**
**that** the two holding sockets (7) in the driving bar (1) are each constructed omega-shaped and arranged and dimensioned in such a way that they grip two opposing sections of a chain-link (8) around more than 180° of their circumference.

## Revendications

1. Taquet entraîneur (1) utilisable au niveau d'une chaîne d'aliments pour animaux présentant des maillons de chaîne de forme annulaire,
sachant que le taquet entraîneur (1) est configuré faisant saillie des deux côtés au-delà de la largeur d'un maillon (8) de chaîne,
que le taquet entraîneur (1) présente deux logements creux (7) pour recevoir deux segments se faisant face d'un maillon (8) de chaîne,
et que le taquet entraîneur (1) est configuré, dans la zone de ces deux logements creux (7), avec une élasticité lui permettant d'être clipsé par encliquetage sur le maillon (8) de chaîne, **caractérisé en ce**
**que** le taquet entraîneur (1) présente une saillie (4) centrale approximativement fongiforme,
saillie présentant un tronc au tracé vertical (5) et un écran (6) au tracé horizontal, et disposée et dimensionnée de sorte
**que** des deux côtés du tronc (5) et en dessous de l'écran (6) sont créés les deux logements creux (7) dans lesquels peuvent être reçus deux segments se faisant face d'un maillon (8) de chaîne.

2. Taquet entraîneur selon la revendication 1, **caractérisé en ce**
**que** les deux logements creux (7) du taquet entraîneur (1) sont configurés comme deux évidements présentant respectivement une section de forme oméga.

3. Taquet entraîneur selon l'une des revendications précédentes, **caractérisé en ce**
**que** le taquet entraîneur (1) est en matière plastique.

4. Taquet entraîneur selon l'une des revendications précédentes, **caractérisé en ce**
**qu'**un verrou de retenue (12) immobilisable contre le taquet entraîneur (1) recouvre les deux logements creux (7).

5. Taquet entraîneur selon la revendication 4, **caractérisé en ce**
**que** le verrou de retenue (12) est monté par charnière contre le taquet entraîneur (1) et qu'il présente, à distance de la charnière, une géométrie d'encliquetage qui interagit avec une géométrie d'encliquetage complémentaire que présente le taquet entraîneur (1),
de sorte que le verrou de retenue (12) est immobilisable à la façon d'une fermeture à cliquet contre le taquet entraîneur (1).

6. Taquet entraîneur selon la revendication 5, **caractérisé en ce**
**que** le verrou de retenue (12) est relié monobloc, en formant une charnière pelliculaire, avec le taquet entraîneur (1).

7. Taquet entraîneur selon la revendication 4, **caractérisé en ce**
**que** le verrou de retenue (12) et le taquet entraîneur (1) présentent, à deux endroits distants l'un de l'autre, des géométries d'encliquetage respectivement complémentaires,
de sorte que le verrou de retenue (12) est immobilisable à la façon d'une fermeture à cliquet contre le taquet entraîneur (1).

8. Taquet entraîneur selon la revendication 4, **caractérisé en ce**
**que** le taquet entraîneur (1) présente un côté avant générant de la pression sur l'aliment pour animaux dans un sens de convoyage,
et en ce que le verrou de retenue (12) est enfilable par l'avant sur le taquet entraîneur (1).

9. Taquet entraîneur selon l'une des revendications 4 à 8, **caractérisé en ce**
**que** contre le taquet entraîneur (1), derrière le verrou de retenue (12), est disposé une butée (14) délimitant la mobilité du verrou de retenue (12).

10. Chaîne d'aliments pour animaux avec un taquet entraîneur (1) configuré selon l'une des revendications précédentes,
sachant que la chaîne d'aliments pour animaux présente plusieurs taquets entraîneurs (1) fixés contre un maillon (8) de chaîne.

11. Chaîne d'aliments pour animaux selon la revendication 10, **caractérisé en ce**
**que** les deux logements creux (7) du taquet entraîneur (1) présentent respectivement une section de forme oméga et qu'ils sont disposés et dimensionnés de façon à entourer chacun à plus de 180° deux segments se faisant face d'un maillon (8) de chaîne.
